# EUROPEAN PATENT APPLICATION

(11) **EP 0 792 079 A1**
(43) Date of publication of application: **27.08.1997**
(21) Application number: 96113533.2
(22) Date of filing: 23.08.1996
(51) Int. Cl.: H04Q 11/04

(54) **V5 interface architecture**

(30) Priority: 21.02.1996 JP 33407/96
(71) Applicant: FUJITSU LIMITED, Kawasaki-shi, Kanagawa 211 (JP)
(72) Inventor: Ishizuka, Sunao Fujitsu Kyushu, Hakata-ku,Fukuoka-shi Fukuoka 812 (JP); Koyanagi, Masakatsu Fujitsu Kyushu, Hakata-ku,Fukuoka-shi, Fukuoka 812 (JP); Hashinaga, Kenji Fujitsu Kyushu, Hakata-ku,Fukuoka-shi, Fukuoka 812 (JP); Kobayashi, Daisuke Fujitsu Kyushu, Hakata-ku,Fukuoka-shi, Fukuoka 812 (JP); Shigeoka, Yumiko Fujitsu Kyushu, Hakata-ku,Fukuoka-shi, Fukuoka 812 (JP)
(74) Representative: Ritter und Edler von Fischern, Bernhard, Dipl.-Ing.

(57) **Abstract**

A V5 interface architecture connectable via a transmission path to a local exchange (2) which is coupled to a switching network (1), comprising HDLC (High Level Data Link Control Procedure) protocol managers (16) for processing a HDLC protocol of a V5 interface, LAP-V5 (Link Access Procedure for V5) protocol managers (18) for processing a LAP-V5 protocol, an ISDN (Integrated Services Digital Network) protocol manager (20) for processing an ISDN protocol and processing an ISDN frame relay, and a DMA (Direct Memory Access) controller (21) for carrying out a DMA control with respect to data exchanges between an external memory (12) and the HDLC protocol managers, the LAP-V5 protocol managers and the ISDN protocol manager. The HDLC protocol managers, the LAP-V5 protocol manager, the ISDN protocol manager and the DMA controller are provided in a single LSI (large scale integrated circuit) chip (11).

## Description

### BACKGROUND OF THE INVENTION

The present invention generally relates to V5 interfaces which are new digital exchange interfaces, and more particularly to a V5 interface architecture for realizing the V5 interface functions by a single-chip (1-chip) large scale integrated (LSI).

The V5 interface is an interface specification between a local exchange (LE) which corresponds to a terminal station of a switching network and an access network (AN) which corresponds to a multiplexing equipment on a subscriber line. This V5 interface is standardized according to SG13 of ITU-T.

In the V5 interface, there are demands to realize a 1-chip LSI which realizes various functions such as the link-access procedure for V5 (LAP-V5) protocol in conformance with the V5 interface standard, integrated services digital network (ISDN) frame relay and direct memory access control (DMAC).

The V5 interface uses 2.048 Mbps (64 kbps x 32 time slots) as the basic unit, and bearer data such as B-channel data of an ISDN terminal and audio of a telephone set are all transmitted in 1 time slot (64 kbps) unit. In addition, control data between the local exchange (LE) and the access network (AN) are transmitted using a specific time slot called a communication channel.

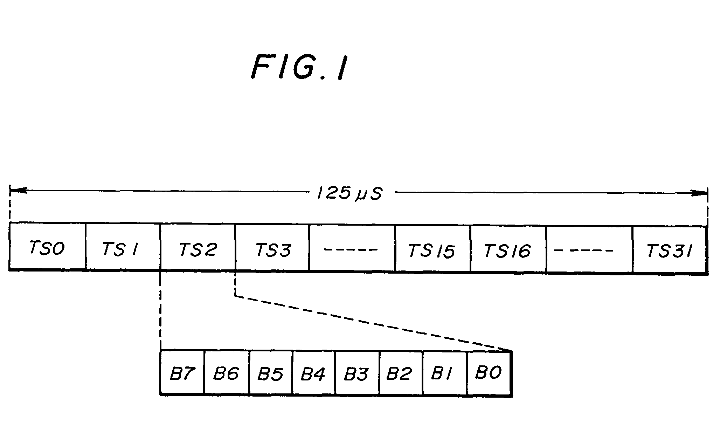

FIG.1 is a diagram showing a transmission format of 2.048 Mbps. In FIG.1, TS0 denotes a frame synchronizing time slot, TS1 through TS14 denote bearer data time slots, TS15 and TS16 denote bearer data time slots or communication channel time slots, TS17 through TS30 denote bearer data time slots, and TS31 denotes bearer data time slot or communication channel time slot.

Data of the communication channel have a message format. In this case, a unique protocol called LAP-V5 which is based on the ISDN LAP-D protocol is used as the message format. The ISDN D-channel frame is also converted into the same frame format as the LAP-V5 and is transmitted using the same time slot (communication channel).

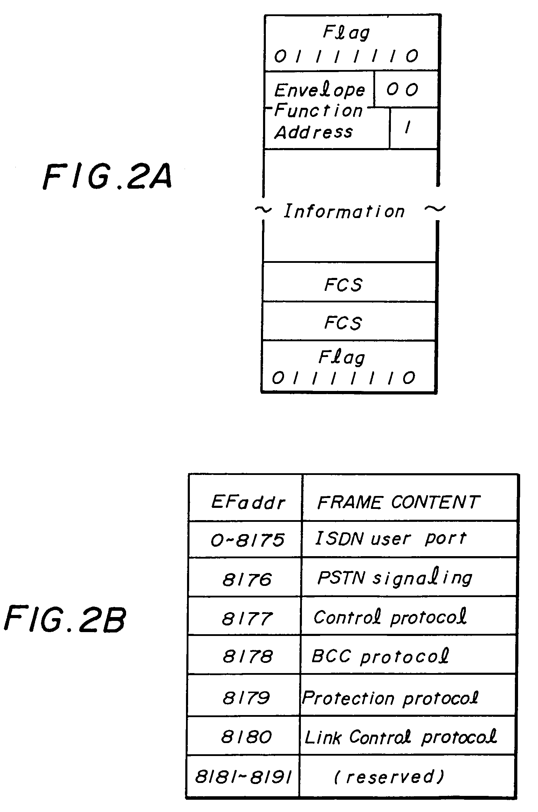

FIGS.2A and 2B are diagrams for explaining a format of the LAP-V5 frame. FIG.2A shows the format of the LAP-V5 frame (V5-envelope frame), and FIG.2B shows the relationship of envelope function addresses (EFaddr) and frame contents.

As shown in FIG.2A, the LAP-V5 frame is made up of an address field indicating the envelope function address, information indicating data corresponding to the envelope function address, a frame check sequence (FCS) for making error detection with respect to the envelope function address and the information, and flags which are added to the start and end of the LAP-V5 frame. The envelope function address is made up of 13 bits and is added with 3 bits of error bits. The error bits indicate a normal state when the bit values are "001" and otherwise indicate an abnormal state.

The frame contents of the envelope function addresses are user port information which indicates the ISDN D-channel for the addresses 0 to 8175, LAP-V5 protocol information for the addresses 8176 to 8180, and spare for the addresses 8181 through 8191.

Furthermore, in the LAP-V5 protocol information, the address 8176 indicates signaling information of a public switched telephone network (PSTN), 8177 indicates a control protocol (connecting information) of the V5 interface, 8178 indicates information of a bearer channel connection (BCC) protocol, 8179 indicates information of a protection protocol, and 8180 indicates information of a link control protocol.

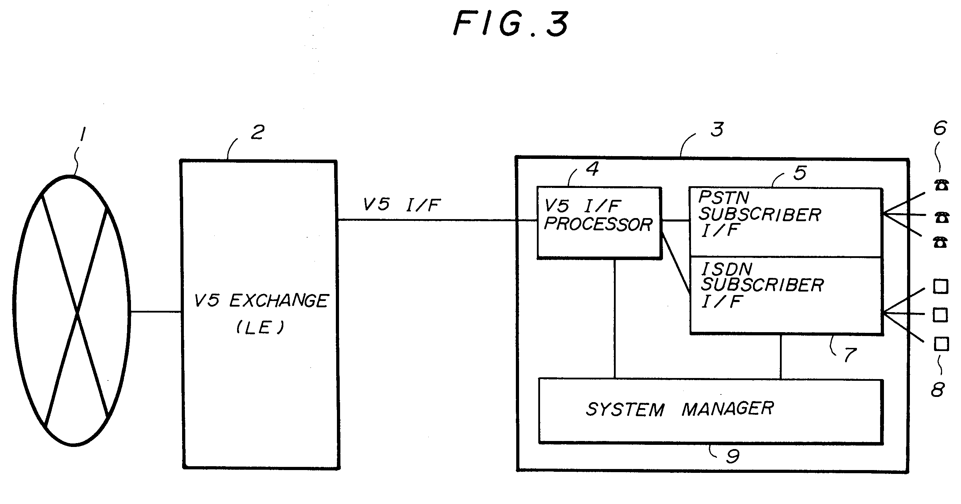

FIG.3 is a system block diagram showing the construction of a network to which the present invention may be applied as will be described later in the specification. The network shown in FIG.3 includes a switched network 1, a V5 exchange which is a local exchange (LE) coupled to the switched network 1, and an access network (AN) 3 which is coupled to the V5 exchange 2 via a transmission path of the V5 interface.

The access network 3 includes a V5 interface processor 4 which is provided with the functions of the V5 interface with respect to the V5 exchange 2, a PSTN subscriber interface 5 which connects a plurality of telephone sets 6, an ISDN subscriber interface 7 which connects a plurality of ISDN terminals 8, and a system manager 9 which controls operations of the V5 interface processor 4, the PSTN subscriber interface 5 and the ISDN subscriber interface 7.

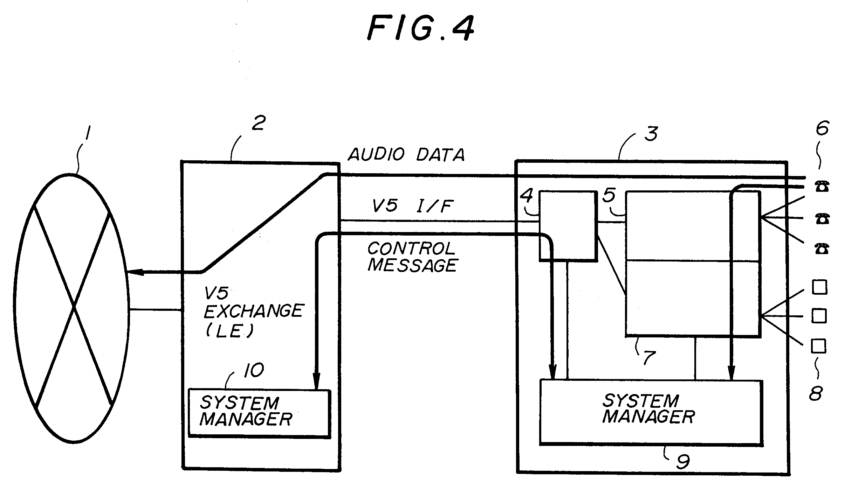

FIG.4 is a system block diagram for explaining the operation of the network shown in FIG.3 when the PSTN is in use. In FIG.4, those parts which are the same as those corresponding parts in FIG.3 are designated by the same reference numerals. In FIG.4, the V5 exchange 2 includes a system manager 10 for controlling the operation of the V5 exchange 2. Signal flows are indicated by bold lines in FIG.4.

In FIG.4, audio data from the telephone set 6 are transmitted and received using one of the time slots in the user data channel (TS1 through TS14, TS17 through TS30) of the V5 interface. Hook information (on-hook, off-hook) and dial pulse information from the telephone set 6 are converted into the V5 message format in the system manager 9 of the access network 3. The converted information is exchanged between the system manager 9 of the access network 3 and the system manager 10 of the V5 exchange 2 using one of the time slots in the communication channel (TS15, TS16, TS31) of the V5 interface.

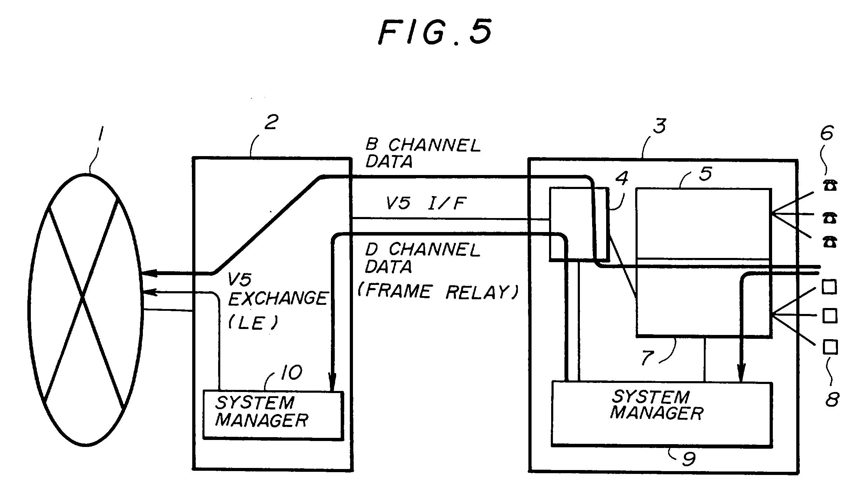

FIG.5 is a system block diagram for explaining the operation of the network shown in FIG.3 when the ISDN is in use. In FIG.5, those parts which are the same as those corresponding parts in FIG.3 are designated by the same reference numerals. Signal flows are indicated by bold lines in FIG.5.

In FIG.5, B-channel data from the ISDN terminal 8 are transmitted and received using two time slots in the user data channel (TS1 through TS14, TS17 through TS30) of the V5 interface. In addition, D-channel data from the ISDN terminal 8 are added with the envelope function address and converted into an ISDN frame relay format of the V5 interface in the system manager 9 of the access network 3. The converted data are exchanged between the system manager 9 of the access network 3 and the system manager 10 of the V5 exchange 2 using one of the time slots in the communication channel (TS15, TS16, TS31) of the V5 interface.

In order to reduce the size of the access network 3 shown in FIG.3, it is desirable to realize the V5 interface processor 4 in the form of a 1-chip LSI. But conventionally, various problems prevented the realization of the V5 interface functions by a 1-chip LSI.

More particularly, if processing of the ISDN frame and the LAP-V5 frame in a plurality of channels is to be realized, the circuit scale of the V5 interface processor 4 becomes extremely large, thereby making it extremely difficult to form the V5 interface processor 4 by a 1-chip LSI. On the other hand, the load on the V5 interface processor 4 becomes large, thereby making it difficult for a single processor to carry out the processing.

### SUMMARY OF THE INVENTION

Accordingly, it is a general object of the present invention to provide a novel and useful V5 interface architecture in which the problems described above are eliminated.

Another and more specific object of the present invention is to provide a V5 interface architecture which can realize the functions of the DMAC, the ISDN frame relay and the LAP-V5 protocol in conformance with the V5 interface standard by a 1-chip LSI.

Still another object of the present invention is to provide a V5 interface architecture connectable via a transmission path to a local exchange which is coupled to a switching network, comprising HDLC (High Level Data Link Control Procedure) protocol manager means for processing a HDLC protocol of a V5 interface, LAP-V5 (Link Access Procedure for V5) protocol manager means for processing a LAP-V5 protocol, ISDN (Integrated Services Digital Network) protocol manager means for processing an ISDN protocol and processing an ISDN frame relay, and DMA (Direct Memory Access) controller means for carrying out a DMA control with respect to data exchanges between external memory means and the HDLC protocol manager means, the LAP-V5 protocol manager means and the ISDN protocol manager means, where the HDLC protocol manager means, the LAP-V5 protocol manager means, the ISDN protocol manager means and the DMA controller means are provided in a single LSI (large scale integrated circuit) chip. According to the V5 interface architecture of the present invention, it is possible to greatly reduce the circuit scale that is required for the V5 interface control and the V5 protocol control. In addition, it is possible to improve the processing speed of a processing part of the processor, and also reduce the required memory capacity. Moreover, it is possible to realize the V5 interface functions by a 1-chip LSI.

Other objects and further features of the present invention will be apparent from the following detailed description when read in conjunction with the accompanying drawings.

### BRIEF DESCRIPTION OF THE DRAWINGS

FIG.1 is a diagram showing a transmission format of 2.048 Mbps;
FIGS.2A and 2B respectively are diagrams for explaining a format of the LAP-V5 frame;
FIG.3 is a system block diagram showing the construction of a network to which the present invention may be applied;
FIG.4 is a system block diagram for explaining the operation of the network shown in FIG.3 when the PSTN is in use;
FIG.5 is a system block diagram for explaining the operation of the network shown in FIG.3 when the ISDN is in use;
FIG.6 is a system block diagram for explaining a first embodiment of a V5 interface architecture according to the present invention;
FIG.7 is a system block diagram for explaining second through seventh embodiments of the V5 interface architecture according to the present invention;
FIG.8 is a system block diagram for explaining eighth and ninth embodiments of the V5 interface architecture according to the present invention;
FIG.9 is a system block diagram for explaining a conceivable method of adding an envelope function address;
FIG.10 is a system block diagram for explaining tenth and eleventh embodiments of the V5 interface architecture according to the present invention;
FIG.11 is a system block diagram for explaining a twelfth embodiment of the V5 interface architecture according to the present invention;
FIG.12 is a timing chart for explaining a thirteenth embodiment of the V5 interface architecture according to the present invention;
FIG.13 is a system block diagram for explaining a fourteenth embodiment of the V5 interface architecture according to the present invention;
FIG.14 is a system block diagram for explaining a fifteenth embodiment of the V5 interface architecture according to the present invention;
FIG.15 is a diagram for explaining the fifteenth embodiment;
FIG.16 is a system block diagram for explaining a seventeenth embodiment of the V5 interface architecture according to the present invention;
FIG.17 is a system block diagram for explaining an eighteenth embodiment of the V5 interface architecture according to the present invention;
FIG.18 is a diagram for explaining a nineteenth embodiment of the V5 interface architecture according to the present invention;
FIGS.19A and 19B respectively are diagrams for explaining a twentieth embodiment of the V5 interface architecture according to the present invention;
FIG.20 is a system block diagram for explaining a twenty-first embodiment of the V5 interface architecture according to the present invention;
FIG.21 is a system block diagram for explaining a twenty-second embodiment of the V5 interface architecture according to the present invention; and
FIG.22 is a system block diagram for explaining a twenty-third embodiment of the V5 interface architecture according to the present invention.

### DESCRIPTION OF THE PREFERRED EMBODIMENTS

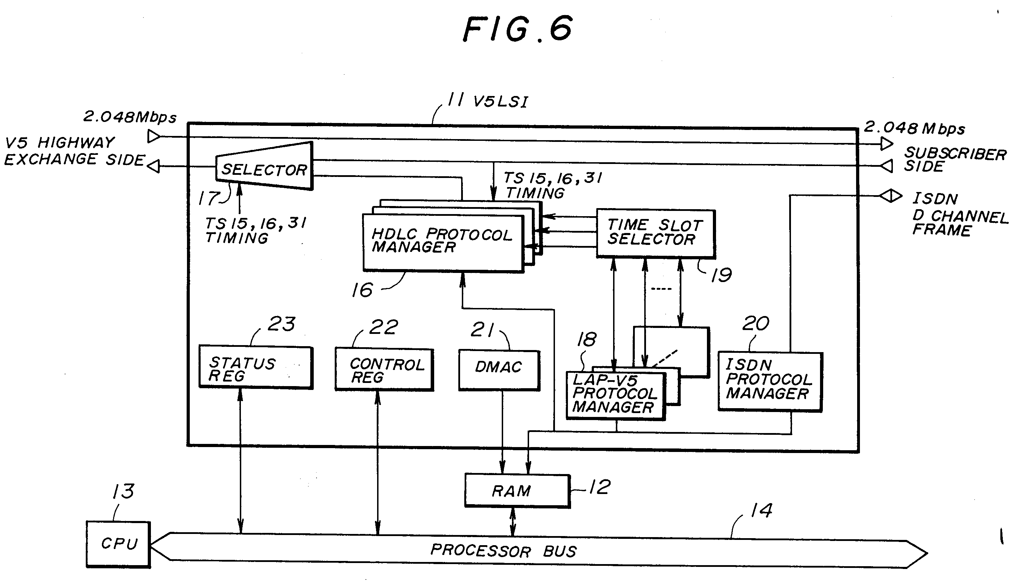

FIG.6 is a system block diagram for explaining a first embodiment of a V5 interface architecture according to the present invention. FIG.6 shows the construction of a V5 LSI which realizes a V5 interface processor. In this embodiment, a V5 interface control and a V5 protocol process in conformance with the V5 interface standard are realized by a 1-chip LSI.

A V5 LSI 11 shown in FIG.6 is coupled to a random access memory (RAM) 12, a central processing unit (CPU) 13 and a processor bus 14 which are provided externally to the V5 LSI 11. The processor bus 14 is coupled to the CPU 13, and the CPU 13 controls the general operation of the V5 LSI 11.

In the V5 LSI 11, high-level data link control procedure (HDLC) frame managers 16 process HDLC protocols. The HDLC frame managers 16 that are provided amount to 3 time slots corresponding to the frames which are exchanged with timings of TS15, TS16 and TS31. A selector 17 inserts the data which are transmitted from the HDLC frame managers 16 of each of the 3 time slots on a 2.048 Mbps line with timings of TS15, TS16 and TS31.

LAP-V5 protocol managers 18 process LAP-V5 protocols. The LAP-V5 protocol managers 18 that are provided amount to 5 channels corresponding to the envelope function addresses 8176 through 8180, and process the corresponding data in parallel. A time slot selector 19 carries out the data transfer between the HDLC frame managers 16 amounting to the 3 time slots and the LAP-V5 protocol managers 18 amounting to the 5 channels.

An ISDN frame manager 20 processes ISDN protocols. A DMAC 21 controls DMA transfer of data between the RAM 12 and the HDLC frame managers 16, the LAP-V5 protocol managers 18 and the ISDN frame manager 20. A control register 22 holds command information of the CPU 13. A status register 23 holds status information of the CPU 13.

In this embodiment, the V5 LSI 11 shown in FIG.6 is realized by a 1-chip LSI.

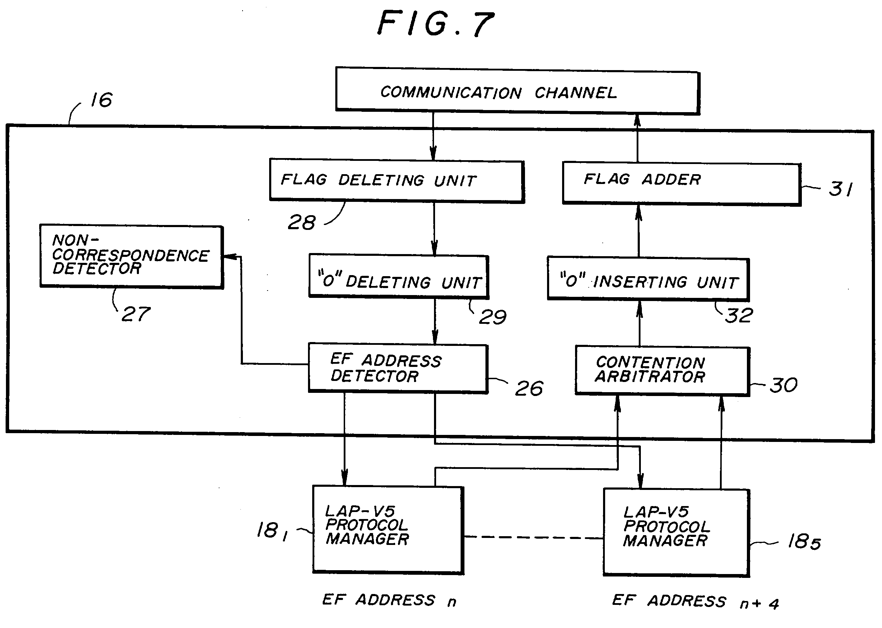

FIG.7 is a system block diagram for explaining second through seventh embodiments of the V5 interface architecture according to the present invention. FIG.7 shows the HDLC frame manager 16 for processing the HDLC of the V5 interface, together with LAP-V5 protocol managers 18₁ through 18₅ respectively corresponding to the envelope function addresses n through n+4.

In the second embodiment, when receiving the communication channel by the V5 interface, an envelope function address detector 26 shown in FIG.7 separates a V5 envelope frame from the data received by the HDLC protocol managers 16, detects the envelope function address, and determines the block of the LAP-V5 protocol managers 18 amounting to the 5 channels to which block the data are to be transmitted.

By taking the above described measures, it is unnecessary to detect the envelope function address in the LAP-V5 protocol managers 18. Hence, compared to the case where the LAP-V5 protocol managers are provided with the function of detecting the envelope function address, it is possible to reduce the circuit scale of the envelope function address detecting function by approximately 1/5.

In the third embodiment, when receiving the communication channel by the V5 interface, an error frame envelope function non-correspondence detector 27 shown in FIG.7 detects an error frame and an envelope function non-correspondence from the data received by the HDLC protocol managers 16. When the error frame envelope function non-correspondence detector 27 detects an abnormality of an address field from error bits or, receives a non-supported address, the error frame envelope function non-correspondence detector 27 carries out a control so as not to send the error frame and the envelope function to the LAP-V5 protocol managers 18.

By taking the above described measures, the LAP-V5 protocol managers 18 need not detect the error frame and the envelope function non-correspondence. Accordingly, compared to the case where the LAP-V5 protocol managers are provided with such detecting functions, it is possible to reduce the circuit scale of the envelope function non-correspondence detecting function by approximately 1/5.

In the fourth embodiment, when receiving the communication channel by the V5 interface, a start/end flag deleting unit 28 shown in FIG.7 simultaneously deletes a start flag and an end flag when separating the V5 envelope frame from the data received by the HDLC protocol managers 16. Thereafter, the start/end flag deleting unit 28 transmits only the data, deleted of the flags, to the LAP-V5 protocol managers 18 according to the envelope function addresses.

By taking the above described measures, that is, by deleting the start flag and the end flag in the HDLC protocol managers 16, it becomes unnecessary to delete these flags in the LAP-V5 protocol managers 18. Accordingly, compared to the case where the LAP-V5 protocol managers are provided with such deleting functions, it is possible to reduce the circuit scale of the start/end flag deleting function by approximately 1/5.

In the fifth embodiment, when receiving the communication channel by the V5 interface, a "0" deleting unit 29 shown in FIG.7 deletes predetermined unnecessary "0"s from the data received by the HDLC protocol managers 16. Thereafter, the "0" deleting unit 29 transmits only the data, deleted of the predetermined unnecessary "0"s, to the LAP-V5 protocol managers 18 according to the envelope function addresses.

The predetermined unnecessary "0"s are introduced according to the provisions of the HDLC protocol. When "11111" appears in the data, "0"s are inserted thereafter at the transmitting end, so that a patterns identical to the start flag and the end flag will not appear in the data. At the receiving end, the original data is restored by deleting the "0"s after the "11111".

By taking the above described measures, that is, by deleting the predetermined unnecessary "0"s in the HDLC protocol managers 16, it becomes unnecessary to delete these "0"s in the LAP-V5 protocol managers 18. Accordingly, compared to the case where the LAP-V5 protocol managers are provided with such deleting functions, it is possible to reduce the circuit scale of the "0" deleting function by approximately 1/5.

In the sixth embodiment, when transmitting the data exchanged in a communication path between the plurality of LAP-V5 protocol managers 18 and HDLC protocol managers 16 by multiplexing the data to data of the communication channel, a contention arbitrator 30 shown in FIG.7 carries out a contention arbitration with respect to the transmitting data in the communication path. In addition, a start/end flag adder 31 shown in FIG.7 adds a start flag and an end flag to the data subjected to the contention arbitration, and transmits the data with the added flags in the format of the V5 envelope frame.

According to this embodiment, only the data are exchanged between the HDLC protocol managers 16 and the LAP-V5 protocol managers 18, and the start flag and the end flag are added in the HDLC protocol managers 16. For this reason, compared to the case where the LAP-V5 protocol managers 18 are provided with the function of adding the start flag and the end flag, it is possible to reduce the circuit scale of the start/end flag adding function by approximately 1/5.

In the seventh embodiment, when transmitting data in a plurality of communication paths by multiplexing the data to data of the communication channel, a "0" inserting unit 32 shown in FIG.7 inserts "0"s to the transmitting data in the communication paths subjected to the contention arbitration based on the provisions of the HDLC protocol, so as to prevent the data from being confused with the start flag and the end flag. Thereafter, the data, inserted with the "0"s, are added with the start flag and the end flag and transmitted in the format of the V5 envelope frame.

By inserting the "0"s in the HDLC protocol managers 16, it is possible to reduce the circuit scale of the "0" inserting function by 1/5 compared to the case where the LAP-V5 protocol managers 18 are provided with the "0" inserting function.

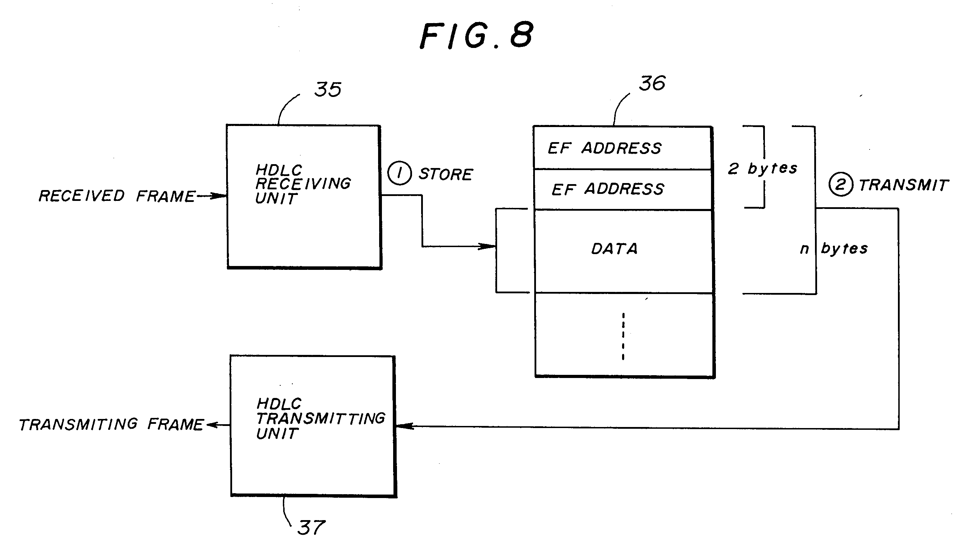

FIG.8 is a system block diagram for explaining eighth and ninth embodiments of the V5 interface architecture according to the present invention. FIG.8 shows a method of storing received data in the HDLC protocol managers 16 of the V5 interface.

According to the eighth embodiment, a HDLC receiving unit 35 shown in FIG.8 stores only a data portion of the received data into a memory 36. As shown in FIG.8, a storage region of the memory 36 includes a region amounting to 2 bytes for adding the envelope function address, so that an arbitrary envelope function address may be added.

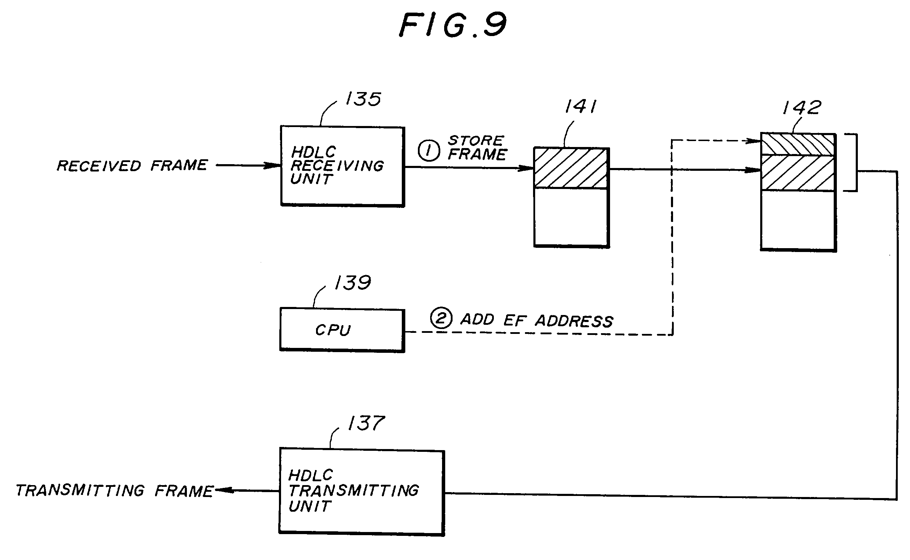

FIG.9 is a system block diagram for explaining a conceivable method of adding an envelope function address. In this case, only the data portion of the frame received by a HDLC receiving unit 135 is temporarily stored in a first memory 141. When a CPU 139 carries out a process of adding the envelope function address, the received data are moved to another memory 142 so that the envelope function address is added thereto. The data added with the envelope function address and stored in the memory 142 are transmitted via a HDLC transmitting unit 137.

On the other hand, in the eighth embodiment, it is unnecessary to carry out the process of moving the received data to another memory as in the conceivable method shown in FIG.9, and the data can be transmitted by simply setting the envelope function address in an empty region of the memory 36. As a result, the ISDN frame relay can be realized at a high speed.

In a ninth embodiment of the V5 interface architecture according to the present invention, the envelope function address is preset in the region of the memory 36 for adding the envelope function address in FIG.8. As a result, after storing the received data in the memory 36, it is possible to transmit the data together with the preset envelope function address.

By presetting the envelope function address in the memory 36, it is unnecessary to carry out the process of moving the received data to another memory in order to add the envelope function address as in the conceivable method shown in FIG.9, and the data can simply be transmitted together with the preset envelope function address. As a result, the ISDN frame relay can be realized at a high speed.

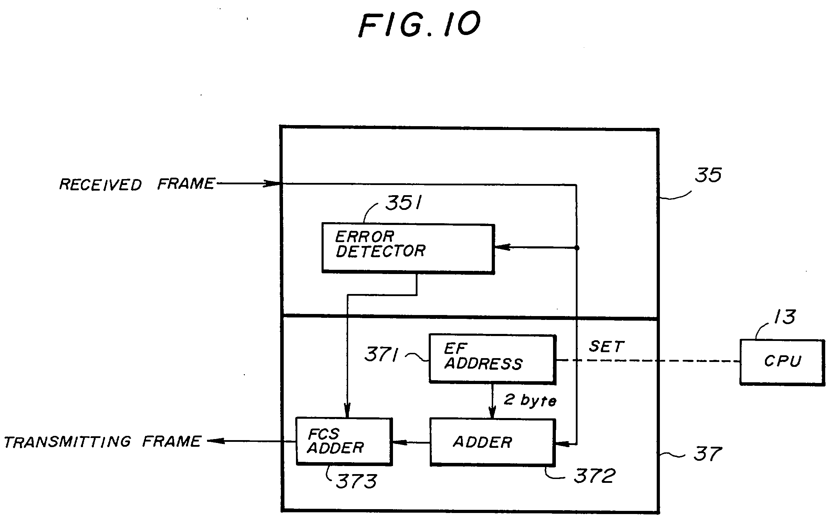

FIG.10 is a system block diagram for explaining tenth and eleventh embodiments of the V5 interface architecture according to the present invention. FIG.10 shows a method of storing received data and transmitting the data in the HDLC protocol managers 16 of the V5 interface.

In the tenth embodiment, with respect to the data received by the HDLC receiving unit 35 shown in FIG.10, the HDLC transmitting unit 37 does not store the received data in a memory. Instead, the HDLC transmitting unit 37 inserts a 2-byte envelope function address 371 that is set from a CPU 13 into the frame by an adder 372 and transmits the frame as it is by adding a frame check sequence (FCS) in a FCS adder 373.

Hence, in this tenth embodiment, it is unnecessary to provide a memory that is necessary in the eighth and ninth embodiments described above in order to add the envelope function address. For this reason, it is possible to eliminate the memory and transmit the data by directly adding the envelope function address. As a result, the ISDN frame relay can be realized at a high speed.

In the eleventh embodiment, the HDLC receiving unit 35 shown in FIG.10 is provided with an error detector 351 for detecting an error frame of the received data. When the error frame is detected by the error detector 351, the FCS adder 373 inverts the FCS responsive to the detected error frame relative to the normal FCS and transmits the frame by adding the inverted FCS. As a result, the error frame can be destroyed in the next receiving stage or block, that is, at the LAP-V5 protocol managers 18.

According to this eleventh embodiment, it is possible to prevent the error frame from propagating to the subsequent stages.

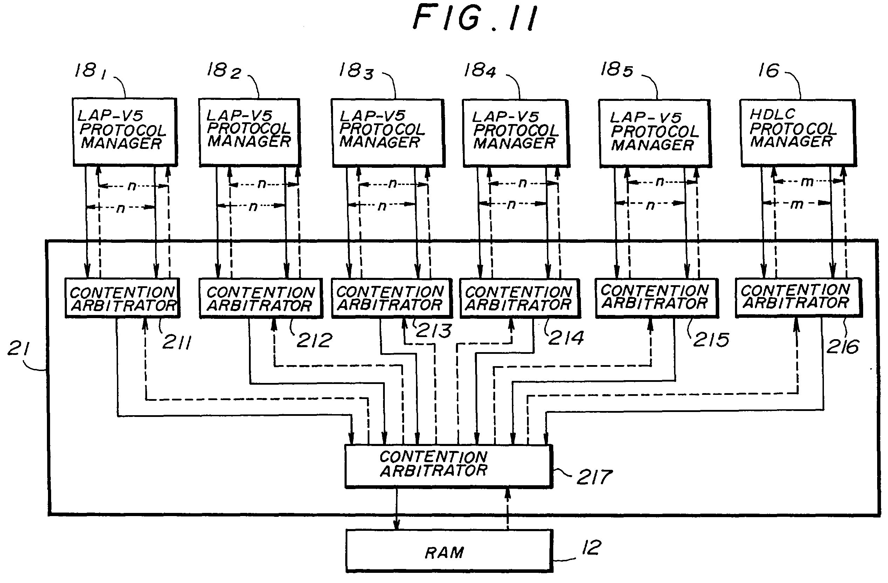

FIG.11 is a system block diagram for explaining a twelfth embodiment of the V5 interface architecture according to the present invention. FIG.11 shows a method of carrying out contention arbitration in the DMAC 21 of the V5 interface. In FIG.11, each arrow indicated by a solid line indicates a request, and each arrow indicated by a dotted line indicates an acknowledge.

In FIG.11, an arbitrary number of DMA requests are made from the 5 channels of the LAP-V5 protocol managers 18₁ through 18₅ and the 1 channel of the HDLC protocol managers 16. In this particular case, n requests are made from the 5 channels of the LAP-V5 protocol managers 18₁ through 18₅, and m requests are made from the 1 channel of the HDLC protocol manager 16. The DMAC 21 includes contention arbitrators 211 through 216 for carrying out contention arbitration with respect to the requests from the corresponding LAP-V5 protocol managers 18₁ through 18₅ and HDLC protocol manager 16, and a contention arbitrator 217 for carrying out contention arbitration with respect to results of contention arbitration made in the contention arbitrators 211 through 216, so as to hierarchically carry out the contention arbitration of the requests. Hence, one request is output from the contention arbitrator 217 so as to make an access to the RAM 12.

Normally, when making the contention arbitration with respect to a plurality of requests, all of the requests are once accepted and the contention arbitration is then made so as to select a valid request. But in this embodiment, the contention arbitrators 211 through 215 respectively carry out contention arbitration with respect to the n requests from the corresponding LAP-V5 protocol managers 18₁ through 18₅ so as to select 1 request from each of the LAP-V5 protocol managers 18₁ through 18₅, and the contention arbitrator 216 carries out contention arbitration with respect to the m requests from the HDLC protocol manager 16 so as to select 1 request from the HDLC protocol manager 16. Hence, 6 requests are selected at the input part of the DMAC 21, and the contention arbitrator 217 thereafter selects 1 valid request by carrying out contention arbitration with respect to the 6 requests at the output part of the DMAC 21.

The DMAC 21 returns 1 acknowledge with respect to the selected valid request, so as to answer a valid acknowledge with respect to the request which is selected at the output part of the DMAC 21 from the 6 requests which are selected at the input part of the DMAC 21. Furthermore, the DMAC 21 returns an acknowledge with respect to each request which is valid as a result of the contention arbitration made at the input part of the DMAC 21.

Accordingly, the DMAC 21 selects 1 valid request from the arbitrary requests from the 5 channels of the LAP-V5 protocol managers 18₁ through 18₅ and the 1 channel of the HDLC protocol manager 16, and returns 1 valid acknowledge with respect to the selected valid request.

Hence, this embodiment does not carry out the contention arbitration simultaneously with respect to all of the requests, but carries out the contention arbitration in divisions by employing a tree structure, so as to hierarchically reduce the selected requests. As a result, it is possible to carry out the contention arbitration at a high speed compared to the case where the contention arbitration is carried out simultaneously with respect to all of the requests.

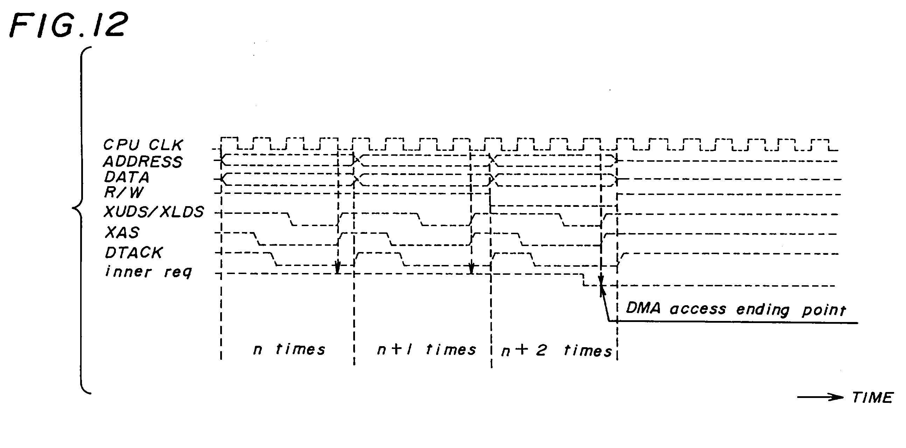

FIG.12 is a timing chart for explaining a thirteenth embodiment of the V5 interface architecture according to the present invention. The timing chart of FIG.12 shows access timings of the DMAC 21 when making an access to the RAM 12.

In this thirteenth embodiment, when making an access to the RAM 12 so as to make a read/write in the V5 interface, the DMAC 21 makes a polling with respect to the requests selected as in the case of the twelfth embodiment described above. The polling is made at timings indicated by dotted arrows in FIG.12 within the DMA timing. The DMAC 21 judges whether the DMA is to continue or to end based on the state of the request, and controls the DMA depending on the judgement. The requests selected as in the case of the twelfth embodiment includes, a command request, a status request, a command header clear request, a frame retransmission request and a frame transmission request.

In the timing chart of FIG.12, the access to the RAM 12, that is, the read/write, is carried out based on a CPU clock (CPU CLK), so that 4 CPU clocks (CPU CLK) correspond to 1 read/write cycle. Of course, 1 read/write cycle may correspond to an arbitrary number of CPU clocks (CPU CLK) other than 4.

The read/write timing in this case determines data (DATA) and address (ADDRESS) at rising edges of a data strobe signal (XUDS/XLDS) and an address strobe signal (XAS). As may be seen from the timing chart of FIG.12, when the access to the RAM 12 ends at a (n+2)th access, the number of accesses peculiar to each request is not managed, but only a state of an access continue/end state management signal (inner req) within the V5 LSI 11 is managed. When the access continue/end state management signal (inner req) has a high level at a timing within 1 read/write cycle, the access is continued. On the other hand, the access ends at the present access when the access continue/end state management signal (inner req) has a low level.

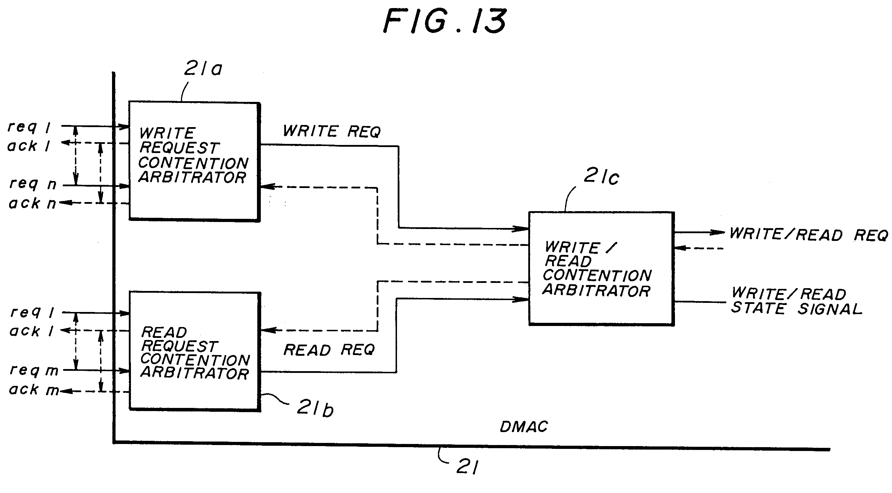

FIG.13 is a system block diagram for explaining a fourteenth embodiment of the V5 interface architecture according to the present invention. FIG.13 shows a contention arbitration method of the DMA controller 21. In FIG.13, each arrow indicated by a solid line indicates a request, and each arrow indicated by a dotted line indicates an acknowledge.

In FIG.13, an arbitrary number of DMA requests are made from the 5 channels of the LAP-V5 protocol managers 18 and the 1 channel of the HDLC protocol managers 16. In this particular case, n requests are made from the 5 channels of the LAP-V5 protocol managers 18, and m requests are made from the 1 channel of the HDLC protocol manager 16. The DMAC 21 finally selects 1 request by making contention arbitration with respect to the requests, and makes an access to the RAM 12.

The DMAC 21 includes a contention arbitrator 21a for carrying out contention arbitration with respect to a plurality of write requests to select 1 write request, a contention arbitrator 21b for carrying out contention arbitration with respect to a plurality of read requests to select 1 read request, and a read/write contention arbitrator 21c for carrying out contention arbitration with respect to the 1 write request and 1 read request, so as to select 1 write/read request. The write/read contention arbitrator 21c distinguishes a write mode and a read mode depending on a write/read state signal which indicates the write or read mode.

Accordingly, 1 write/read request is selected from a plurality of write requests and read requests, and the write/read state signal is produced so as to enable the write mode and the read mode to be distinguished from each other. Compared to the case where the write request and the read request are processed as independent signals, it is possible to reduce the number of contention arbitrators used. FIG.13 shows only the circuit construction of the DMAC 21 with respect to the requests from one block out of the 5 channels of LAP-V5 protocol managers 18 and the 1 channel of HDLC protocol manager 16.

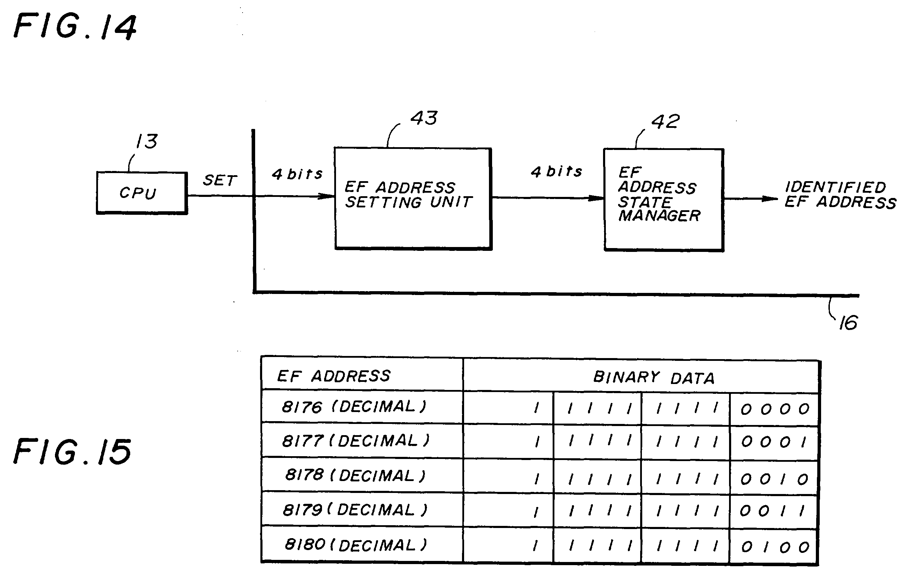

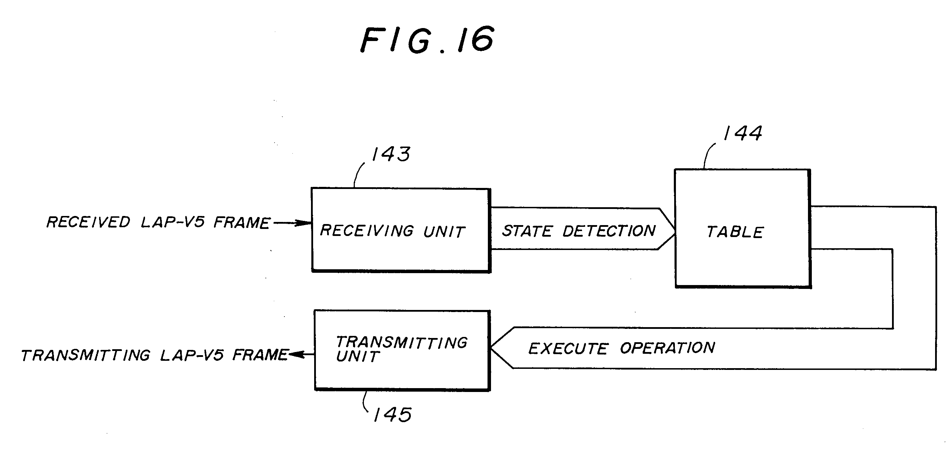

FIGS.14 and 15 respectively are diagrams for explaining a fifteenth embodiment of the V5 interface architecture according to the present invention. FIG.14 is a system block diagram showing a part of the HDLC protocol manager 16, and FIG.15 is a diagram showing the relationship of the envelope function address and binary data. In this embodiment, it is possible to identify the envelope function addresses allocated in the V5 interface by setting only the lower 4 bits.

The envelope function addresses allocated in the V5 interface are 8176 through 8180 in decimal. The upper 9 bits of the envelope function addresses are the same, and only the lower 4 bits differ depending on the envelope function address, as shown in FIG.15. In this embodiment, only 5 addresses need to be identified, and for this reason, it is possible to identify the envelope function addresses by setting only the lower 4 bits.

In FIG.14, the CPU 13 sets the lower 4 bits of the envelope function address in an envelope function address setting unit 41 which comprises a register. An envelope function address state manager 42 identifies the envelope function address from the upper 9 bits of the envelope function address which are fixedly set, and the lower 4 bits of the envelope function address set in the envelope function address setting unit 41.

Compared to the case where 13 bits of data are set in an envelope function address setting unit, this embodiment can reduce the circuit scale of the envelope function address setting unit 43 by approximately 1/3 because only 4 bits of data need to be held.

In a sixteenth embodiment of the V5 interface architecture according to the present invention, regions of the RAM 12 in the V5 interface, such as a command table, a status table, a reception buffer storage address table, a transmission buffer storage address table, and a reception buffer storage table, are fixed regardless of the envelope function address.

According to this embodiment, the upper bits of the address of the RAM 12 may be treated as fixed values. Hence, it is possible to reduce the circuit scale of a latch circuit which would be necessary to if the upper bits of the address were to be held by the latch circuit.

FIG.16 is a system block diagram for explaining a seventeenth embodiment of the V5 interface architecture according to the present invention. FIG.16 shows a method of making an access to a state transition table when carrying out a process in conformance with the LAP-V5 protocol procedure in the V5 interface.

In the LAP-V5 protocol manager 18 shown in FIG.16, a receiving unit 143 receives the LAP-V5 frame and makes a state detection. Then, an operation process state corresponding to the detected state is read from a state transition table 144, so as to recognize the next operation to be carried out. A transmitting unit 145 transmits the LAP-V5 frame based on the recognized operation to be carried out.

In this embodiment, the state transition table 144 is provided within the V5 LSI 11. Hence, compared to the case where the state transition is managed by an external read only memory (ROM) or the like, this embodiment can control the LAP-V5 protocol by hardware without having to rely on software control of a processor.

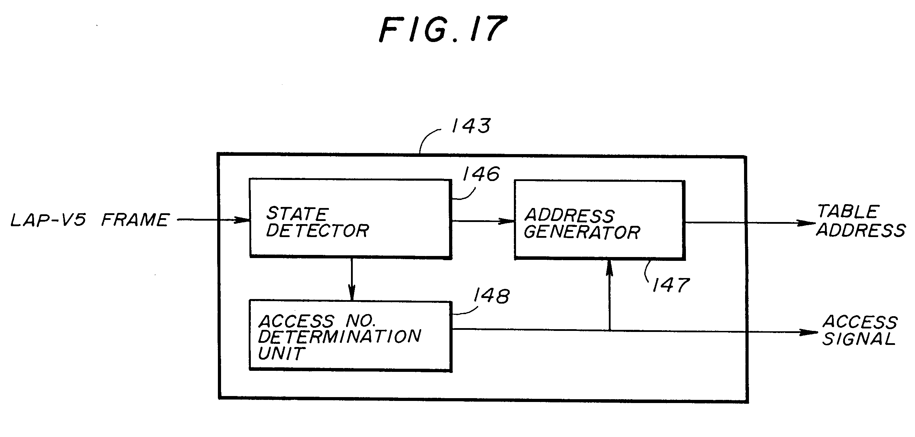

FIG.17 is a system block diagram for explaining an eighteenth embodiment of the V5 interface architecture according to the present invention. FIG.17 shows a method of making an access to a state transition table when carrying out a process in conformance with the LAP-V5 protocol in the V5 interface.

In this embodiment, the state transition table 144 of the seventeenth embodiment described above is managed by hardware. More particularly, when an arbitrary state is generated and an access is to be made to the state transition table 144 shown in FIG.16, a state detector 146 receives the LAP-V5 frame and makes a state detection. In FIG.17, an access number determination unit 148 recognizes a number of accesses to be made depending on the state detected by the state detector 146. An address generator 147 generates a table access based on the state detected by the state detector 146 and an access signal from the access number determination unit 148 indicative of the number of accesses to be made. The access to the state transition table 144 is made based on the table address generated by the address generator 147 and the access signal from the access number determination unit 148.

According to this embodiment, it is possible to reduce the access time compared to the case where the number of accesses is recognized after making access to the state transition table 144.

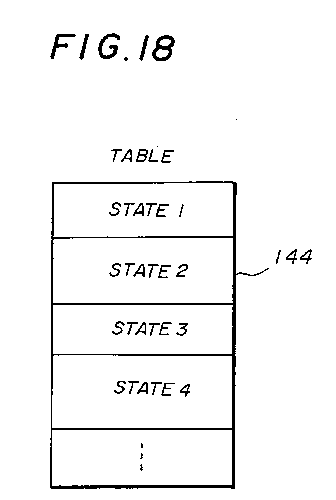

FIG.18 is a diagram for explaining a nineteenth embodiment of the V5 interface architecture according to the present invention. FIG.18 shows a method of forming a state transition table when carrying out a process in conformance with the LAP-V5 protocol procedure in the V5 interface.

When an arbitrary state is generated and an access is made to the state transition table 144 of the seventeenth embodiment described above, the number of accesses differs depending on the state. For this reason, when a fixed region is secured for the number of accesses, the region is not efficiently utilized and may be wasted because the number of accesses may actually not require all of the region.

Hence, in this embodiment, the region of the state transition table 144 is set as shown in FIG.18 when employing the seventeenth and eighteenth embodiment described above. As shown in FIG.18, states 1, 2, 3, 4, ... are set by filling the region of the state transition table 144 in the generated order. As a result, it is possible to reduce the total region of the state transition table 144.

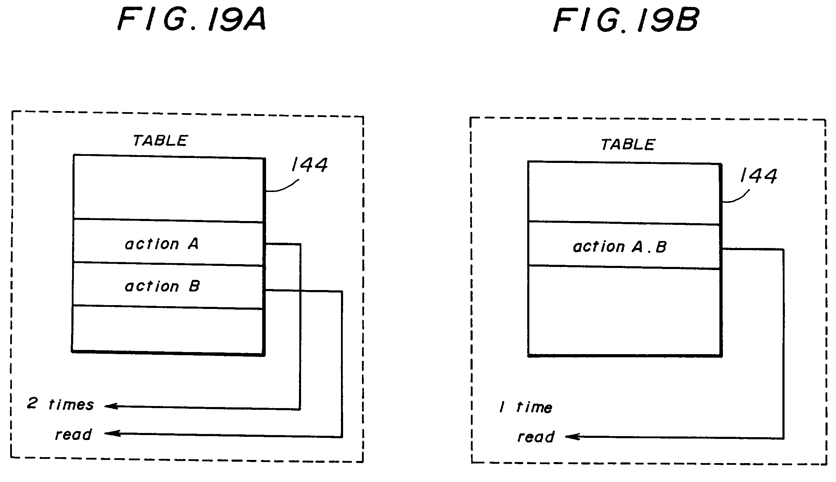

FIGS.19A and 19B respectively are diagrams for explaining a twentieth embodiment of the V5 interface architecture according to the present invention. FIG.19B shows a method of making an access to a state transition table in this embodiment when carrying out a process in conformance with the LAP-V5 protocol in the V5 interface, and FIG.19A shows a normal method of making the access to the state transition table for comparison purposes.

For the sake of convenience, it is assumed that an arbitrary state is generated in the state transition table 144 of the seventeenth embodiment described above, an action (A) with respect to this arbitrary state exists, and another common action (B) with respect to this arbitrary state exists. In this case, the normal method would require two accesses to the state transition table 144 as shown in FIG.19A.

On the other hand, according to this embodiment, the 2 actions (A) and (B) are reduced into 1 action (A, B), so that only 1 access is required to the state transition table 144 as shown in FIG.19B. Therefore, according to this embodiment, it is possible to reduce the number of accesses to be made to the state transition table 144.

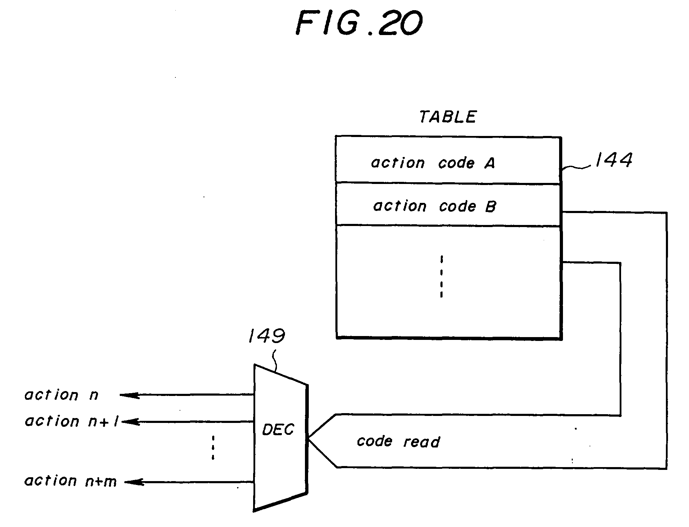

FIG.20 is a system block diagram for explaining a twenty-first embodiment of the V5 interface architecture according to the present invention. FIG.20 shows a method of reading a state transition table when carrying out a process in conformance with the LAP-V5 protocol in the V5 interface.

In the LAP-V5 protocol manager 18 of this embodiment, all patterns of the actions with respect to the existing states are coded in the state transition table 144 shown in FIG.20 which is similar to that of the seventeenth embodiment described above except that all patterns of the actions are coded. The code of the action read from the state transition table 144 is decoded in a decoder 149 so as to determine the action.

Hence, by coding the operation to be carried out, this embodiment can reduce the number of accesses made to the state transition table 144 and reduce the region of the state transition table 144.

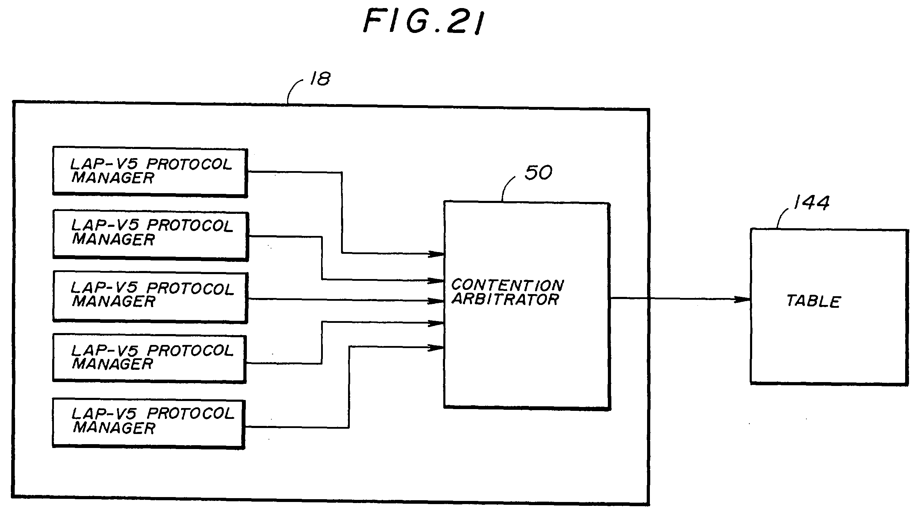

FIG.21 is a system block diagram for explaining a twenty-second embodiment of the V5 interface architecture according to the present invention. FIG.21 shows a method of making an access to a state transition table when carrying out a process in conformance with the LAP-V5 protocol using a plurality of communication paths in the V5 interface.

In FIG.21, when making a communication using the plurality of communication paths, it is necessary to carry out a process in conformance with the LAP-V5 protocol in each of the communication paths.

However, the plurality of communication paths are actually not connected simultaneously. Hence, in the LAP-V5 protocol managers 18, a contention arbitrator 50 carries out contention arbitration with respect to the accesses from the 5 channels of the LAP-V5 protocol managers 18, so as to control the plurality of communication paths by a single state transition table 144.

According to this embodiment, it is only necessary to provide the single state transition table 144 because the access is made by arbitration of the contention.

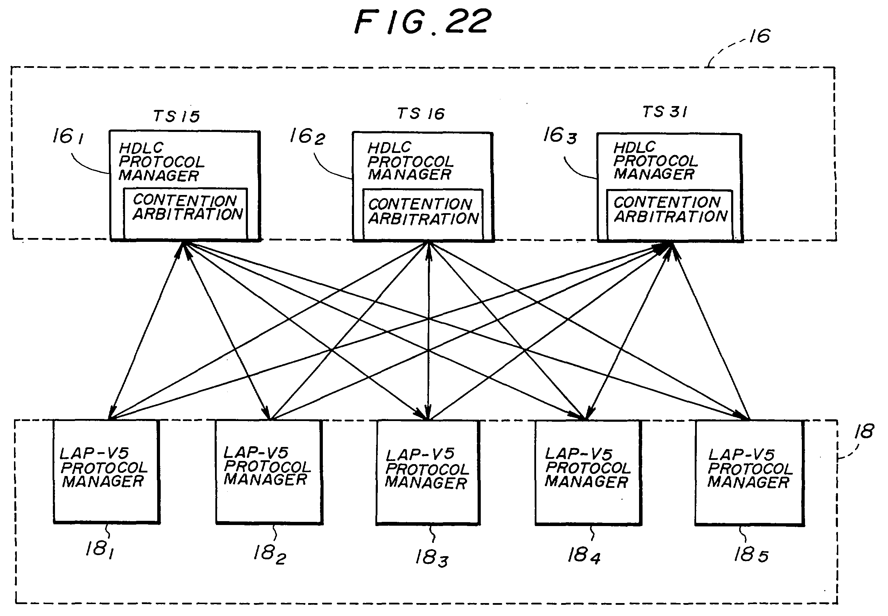

FIG.22 is a system block diagram for explaining a twenty-third embodiment of the V5 interface architecture according to the present invention. FIG.22 shows a method of controlling communication paths when carrying out a process in conformance with the LAP-V5 protocol using the plurality of communication paths in the V5 interface.

When making a communication using the plurality of communication paths, it is necessary to carry out a process in conformance with the LAP-V5 protocol in each of the communication paths.

But a frame transmission is actually carried out only in the communication channels TS15, TS16 and TS31 shown in FIG.22. Hence, in this embodiment, contention arbitration is made with respect to transmission frames transmitted from the 5 channels of the LAP-V5 protocol managers 18₁ through 18₅ in each of the HDLC protocol managers 16₁ through 16₃. As a result, the LAP-V5 protocol managers 18₁ through 18₅ need only have transmission frame generators amounting to the communication channels.

This embodiment can control the plurality of communication channels by the transmission frame generators only amounting to the communication channels.

Therefore, according to the present invention, it is possible to greatly reduce the circuit scale that is required for the V5 interface control and the V5 protocol control. In addition, it is possible to improve the processing speed of a processing part of the processor, and also reduce the required memory capacity. Moreover, it is possible to realize the V5 interface functions by a 1-chip LSI.

Further, the present invention is not limited to these embodiments, but various variations and modifications may be made without departing from the scope of the present invention.

## Claims

1. A V5 interface architecture connectable via a transmission path to a local exchange which is coupled to a switching network,
comprising:
HDLC (High Level Data Link Control Procedure) protocol manager means for processing a HDLC protocol of a V5 interface;
LAP-V5 (Link Access Procedure for V5) protocol manager means for processing a LAP-V5 protocol;
ISDN (Integrated Services Digital Network) protocol manager means for processing an ISDN protocol and processing an ISDN frame relay; and
DMA (Direct Memory Access) controller means for carrying out a DMA control with respect to data exchanges between external memory means and said HDLC protocol manager means, said LAP-V5 protocol manager means and said ISDN protocol manager means,
said HDLC protocol manager means, said LAP-V5 protocol manager means, said ISDN protocol manager means and said DMA controller means being provided in a single LSI (large scale integrated circuit) chip.

2. The V5 interface architecture as claimed in claim 1, characterized in that said HDLC protocol manager means separates a V5 envelope frame and processes the V5 envelop frame for each envelope function address when receiving a communication channel.

3. The V5 interface architecture as claimed in claim 2, characterized in that said HDLC protocol manager means detects and destroys an error frame and a V5 envelope frame which is unsupported by a receiving end when separating the V5 envelope frame from the received communication channel.

4. The V5 interface architecture as claimed in claim 2, characterized in that said HDLC protocol manager means simultaneously deletes a start flag and an end flag added to the V5 envelope frame and processes the V5 envelope frame for each envelope function address when separating the V5 envelope frame from the received communication channel.

5. The V5 interface architecture as claimed in claim 2, characterized in that said HDLC protocol manager means deletes "0"s which are inserted within data beforehand in order to prevent confusion with a start flag and an end flag which are added to the V5 envelope frame and processes the V5 envelope frame for each envelope function address when separating the V5 envelope frame from the received communication channel.

6. The V5 interface architecture as claimed in claim 1, characterized in that said HDLC protocol manager means makes contention arbitration with respect to transmitting data of a plurality of communication paths from said LAP-V5 protocol manager means and transmits the data in a V5 envelope frame format by adding a start flag and an end flag when multiplexing and transmitting the data of the communication paths on a communication channel.

7. The V5 interface architecture as claimed in claim 6, characterized in that said HDLC protocol manager means inserts "0"s in the data in order to prevent confusion with the start flag and the end flag simultaneously as adding the start flag and the end flag to the data.

8. The V5 interface architecture as claimed in claim 1, characterized in that said HDLC protocol manager means includes a memory which stores a data portion of a received frame when making an ISDN frame relay, and said HDLC protocol manager means stores the received data in the memory by emptying a region corresponding to leading 2 bytes of the memory and sets an arbitrary envelope function address in the emptied region.

9. The V5 interface architecture as claimed in claim 1, characterized in that said HDLC protocol manager means includes a memory which stores a data portion of a received frame when making an ISDN frame relay, and said HDLC protocol manager means presets an envelope function address in the memory and stores the received data in the memory depending on the envelope function address.

10. The V5 interface architecture as claimed in claim 1, characterized in that said HDLC protocol manager means inserts a preset address with respect to data of a received frame and directly transmits the frame when making an ISDN frame relay.

11. The V5 interface architecture as claimed in claim 1, characterized in that said HDLC protocol manager means inverts and transmits a frame check sequence if a received frame is an error frame, so that the frame is destroyed at a transmission destination as a frame check sequence error, when making an ISDN frame relay.

12. The V5 interface architecture as claimed in claim 1, characterized in that said DMA controller means comprises:
means for carrying out a contention arbitration for each channel with respect to requests received from 1 channel of said HDLC protocol manager means and 5 channels of said LAP-V5 protocol manager means when making an access to the external memory means, so as to select 6 requests; and
means for carrying out a contention arbitration with respect to said 6 requests so as to accept only 1 of said 6 requests and carrying out a DMA associated with the accepted request.

13. The V5 interface architecture as claimed in claim 1, characterized in that the DMA controller means carries out the DMA control by judging a continuance or end of a DMA from requests which are obtained by making a polling within an access timing of the DMA when making an access to the external memory means.

14. The V5 interface architecture as claimed in claim 1, characterized in that said DMA controller means carries out the DMA control by selecting a request by making a contention arbitration with respect to a write request and a read request when making an access to the external memory means.

15. The V5 interface architecture as claimed in claim 1, characterized in that said HDLC protocol manager means identifies an envelope function address by setting lower 4 bits when setting the envelope function address.

16. The V5 interface architecture as claimed in claim 1, characterized in that a region of the external memory means is fixed so that upper bits of addresses of the external memory means are the same.

17. The V5 interface architecture as claimed in claim 1, characterized in that said LAP-V5 protocol manager means comprises a state transition table storing combinations of operation process states of transmitting and receiving ends in a LAP-V5 protocol procedure, said LAP-V5 protocol manager means controlling the LAP-V5 protocol by a hardware when carrying out a process of the LAP-V5 protocol procedure.

18. The V5 interface architecture as claimed in claim 17, characterized in that an access is made to said state transition table depending on a number of accesses which are recognized in advance as being necessary.

19. The V5 interface architecture as claimed in claim 17, characterized in that an empty region of said state transition table is filled depending on the number of accesses that is different for each state.

20. The V5 interface architecture as claimed in claim 17, characterized in that said state transition table stores a plurality of actions as one data when the plurality of actions are to be generated in correspondence with arbitrary states.

21. The V5 interface architecture as claimed in claim 17, characterized in that said state transition table stores codes corresponding to a plurality of actions which are to be generated, and said LAP-V5 protocol manager means further comprises decoder means for determining all actions by decoding the codes read from said state transition table.

22. The V5 interface architecture as claimed in claim 1, characterized in that said LAP-V5 protocol manager means comprises a single state transition table storing combinations of operation process states of transmitting and receiving ends in a LAP-V5 protocol procedure, and said LAP-V5 protocol manager means carries out a contention arbitration with respect to communications from 5 channels of said LAP-V5 protocol manager means when communications are made by said HDLC protocol manager means and the 5 channels of said LAP-V5 protocol manager means using communication paths, so as to control the communication paths based on said single state transition table.

23. The V5 interface architecture as claimed in claim 5, characterized in that said HDLC protocol manager means comprises HDLC protocol managers respectively carrying out a contention arbitration with respect to corresponding communication channels when the HDLC protocol managers corresponding to the communication channels and 5 channels of said LAP-V5 protocol manager means communicate using communication paths, and each channel of said LAP-V5 protocol manager means controls the communication paths using a number of transmitting frame generators corresponding to said communication channels.
